# EUROPEAN PATENT APPLICATION

(11) **EP 1 955 836 A1**
(43) Date of publication of application: **13.08.2008**
(21) Application number: 07002815.4
(22) Date of filing: 09.02.2007
(51) Int. Cl.: B29C 45/14, B29C 70/68, B60N 2/70, A47C 7/46

(54) **Method and apparatus for manufacturing a suspension pad and corresponding suspension pad**

(71) Applicant: L&P Swiss Holding Company, 9303 Wittenbach (CH)
(72) Inventor: Vanthournout, Olivier, 8930 Lauwe (BE)
(74) Representative: Banzer, Hans-Jörg

(57) **Abstract**

A method for manufacturing a suspension pad and a corresponding apparatus and suspension pad are provided, wherein a suspension pad is formed from a plurality of wires (10, 12, 13) and overmolded for example by injection molding to form overmolded portions (15, 16, 17, 20, 21).

## Description

The present invention relates to a method and an apparatus for manufacturing suspension pads and to corresponding suspension pads. A suspension pad, in this respect, generally relates to a device which is placed in a seating means like a chair, a bench, an automotive seat and the like, for example in a backrest thereof, to provide resiliency and stability to the seat.

A type of suspension pads is basically fabricated from wire, wherein for example two lateral side wires are coupled by a plurality of transverse wires. Such a suspension pad is for example described in EP 1 680 984 A1.

For fixing the transverse wires to the lateral side wires, in some suspension pads the transverse wires are wound around the lateral side wires. In case both the lateral side wires and transverse wires are made of metal, in conventional systems the transverse wires and/or the lateral side wires are individually coated with a plastic material in order to prevent noises generated due to metal scraping on metal. The same holds true if the possibility exists that the wires when mounted e.g. to a seat frame come into contact with other metal parts of the seat frame.

However, such individual coating of wires where the wires have to be positioned separately for example in an overmolding tool for molding plastic on the wire is tedious and time-consuming.

Therefore, it is an object of the present invention to provide a method and an apparatus for fabricating suspension pads which simplify the production process. Furthermore, it is an object to provide a corresponding suspension pad.

This object is achieved by a method according to claim 1, an apparatus according to claim 7 and a suspension pad according to claim 9. The dependent claims define respective preferred or advantageous embodiments.

According to the present invention, first a suspension pad portion which may comprise a complete wire frame of a suspension pad made from a plurality of wires is provided, and then the suspension pad portion is at least partially overmolded in an overmolding step, for example by injection molding.

In other words, according to the invention, wires forming the suspension pad are not overmolded or coated separately, but first a suspension pad portion is formed from a plurality of wires, which is then as a whole subjected to an overmolding process. Therefore, the process efficiency compared with coating wires separately can be increased.

A correspondingly formed suspension pad comprises a plurality of wires, wherein a portion of the suspension pad comprising at least to of said wires is overmolded. Such a portion may for example be a link between two wires, for example a portion where a transverse wire is wound around a longitudinal wire. Therefore, the relative position of the wires is fixed, and the generation of scraping noise is prevented.

In the above-mentioned overmolding step, additional elements may be formed on the suspension pad portion, for example coupling elements for fixing an adjustment mechanism to the wire. This further enhances process efficiency since such coupling elements do not have to be fabricated separately and attached to the suspension pad later.

In the following, embodiments of the present invention will be explained with reference to the attached drawings, wherein:
Fig. 1 shows an example of a suspension pad portion before a molding process,
Fig. 2 shows an embodiment of a suspension pad according to the present invention formed by overmolding the suspension pad of Fig. 1,
Fig. 3 is a partial enlarged view of the embodiment of Fig. 2, and
Fig. 4 is a schematic diagram showing an embodiment of an apparatus according to the present invention.

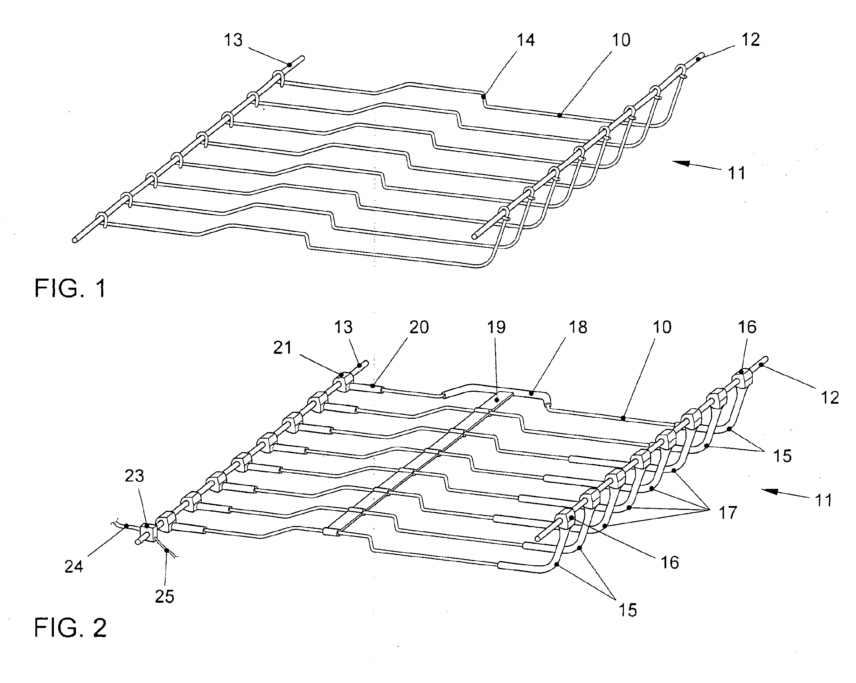

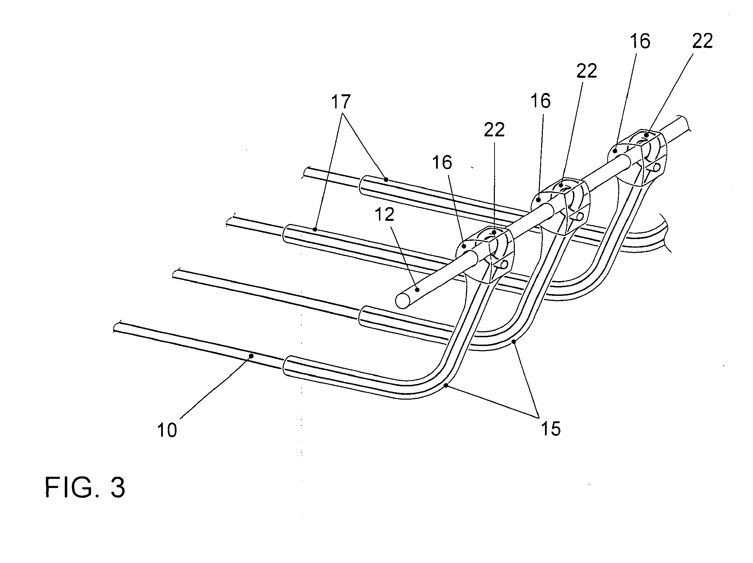

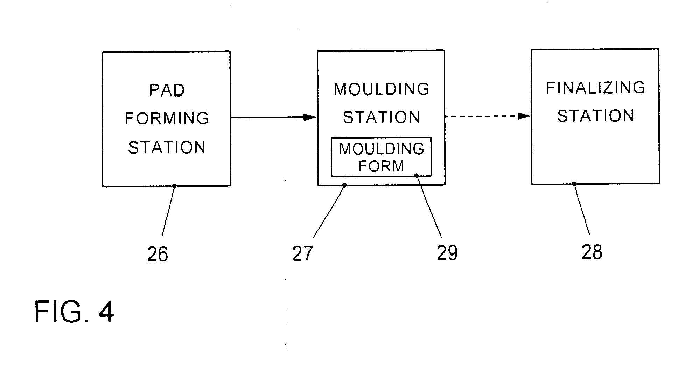

In the following, embodiments of the present invention will be discussed. In this respect, Figs. 1-3 show suspension pads or portions thereof in different process stages of a method according to an embodiment, wherein Fig. 3 is an enlarged view of Fig. 2, and Fig. 4 shows an embodiment of an apparatus for performing the method.

In Fig. 1, an example for a suspension pad portion is shown. The suspension pad portion of Fig. 1 comprises the complete wire part of a suspension pad and in particular comprises two lateral side wires 12, 13 and a plurality of transverse wires 10 running between the lateral side wires 12 and 13. In the suspension pad portion of Fig. 1, lateral side wires 12 and 13 are plastified wires, wherein transverse wires 10 are metal wires. However, other materials may be used as well, for example lateral side wires 12 and 13 may be metal wires as well.

The transverse wires 10 each have a convolution 14 in a middle portion thereof which gives a predetermined resiliency to the respective transverse wires. Furthermore, at a bent portion 11, the transverse wires 10 are bent. Such bending may be provided to accommodate a suspension pad to the seat where it is to be installed. For example, the suspension pad to be fabricated from the suspension pad portion of Fig. 1 may be designed for installing at a right front seat of an automobile, and a symmetrical suspension pad where the bent portion is at the other lateral side may be provided for installation in a left front seat. For other seats, no bending or bending on both sides of the suspension pad may be provided depending on a seating device where the suspension pad is to be installed.

The transverse wires 10 are coupled to the lateral side wires 12, 13 by winding the transverse wires 10 around the lateral side wires 12, 13. In the example shown, the transverse wires 10 end at the lateral side wires 12, 13. In other suspension pads, the transverse wires after being wound around the lateral side wires may extend beyond the lateral side wires in order to provide anchor points to attach the suspension pad to a seat frame.

Referring to the exemplary embodiment of an apparatus for manufacturing a suspension pad, a suspension pad portion like the one shown in Fig. 1 is formed in a pad forming station 26. For example, wire is supplied to the pad forming station as raw material, and transverse wires are wound around lateral side wires and provided with convolutions and bent portions like explained with reference to Fig. 1.

Still referring to Fig. 4, after the suspension pad portion has been formed, it is transferred to a molding station 27 where, in the currently discussed embodiment, it is completely placed in a molding form 29 and subjected to an injection molding process, i.e. overmolded with a plastic material like polypropylene. The transfer of the suspension pad portion from the pad forming station to the molding station may be done automatically, for example using a conveyor belt, or it may be done manually. It should be noted that the pad forming station 26 may also be spatially separate from the molding station 27, for example in a different building or in different plant of a manufacturer.

An embodiment of a suspension pad according to the present invention which results from such an injection molding process applied to the suspension pad portion of Fig. 1 is shown in Figs. 2 and 3, wherein Fig. 3 shows a partial enlarged view of Fig. 2.

As can be seen in Figs. 2 and 3, in the injection molding process end portions of the transverse wires 10 have been overmolded with plastic portions as indicated by reference numerals 15, 17 and 20 ending in thickened plastic portions 16 and 21. Reference numeral 20 designates the plastic portions covering the end portions of the transverse wires opposite to the bent portion 11, wherein the length of the overmolded portion in the embodiment shown is at least approximately equal for all transverse wires 10. Thickened plastic portions 21 cover the link between the transverse wires 10 and the lateral side wire 13, i.e. the portion where in the embodiment shown the transverse wires 10 are wound around the lateral side wire 13. On the opposite side of the transverse wires 10, i.e. the side of the bent portion 11, as best seen in the enlarged view of Fig. 3 different length of the transverse wires are overmolded with plastic portions 15, 17. In particular, in the embodiment shown the four wires in the middle of the suspension pad have a comparatively long plastic portion 17, whereas the plastic portions 15 of the transverse wires at the border of the suspension pad are comparatively shorter. Such different lengths of overmolding may be provided depending on the structure of a seat frame or seat where the suspension pad is to be mounted to prevent contact between the metallic transverse wires with metal parts of the seat frame or the seat. Therefore, the length distribution of the plastic portions 15, 17 and also 20 is not limited to the one shown in the embodiment, but may be adapted freely depending on the application of the suspension pad.

Also at the side of the bent portion 11, as already mentioned thickened plastic portions 16 are provided. As best seen in Fig. 3, these thickened portions 16 cover the portions where the transverse wires 10 are wound around the lateral side wire 12 as indicated by reference numeral 22. Therefore, the transverse wires 10 are securely fixed to the lateral side wires 12, and furthermore a scraping of the portions 22 of the transverse wires 10 on the lateral side wire 12 is prevented, which in turn prevents the generation of unwanted mechanical noise.

Moreover, as seen in the embodiment of Fig. 2, a band-like portion 19 spanning all transverse wires 10 and terminating at an anchoring portion 18 on the convolution 14 of the topmost transverse wire 10 in Fig. 2 is provided by the molding process. Band-like portion 19 together with anchoring portion 18 provides additional stability to the suspension pad and maintains a predetermined distance between transverse wires 10.

With the overmolded portions discussed so far, an embodiment of a suspension pad according to the present invention is finished and ready for integration into a seat. In other embodiments, as also indicated in Fig. 2, additional elements may be provided to the suspension pad during the overmolding process. In the embodiment shown in Fig. 2, an coupling element 23 is molded onto the lateral side wire 13 for coupling the lateral side wire 13 to a Bowden cable of an adjustment mechanism, said Bowden cable comprising a sleeve 24 and a wire 25 running within said sleeve. Conventionally, in this case for example separate plastic clips are used as coupling elements, like for example described in EP 1 680 983 A1. The basic structure of coupling element 23 may be the same as the structure of coupling element described in the above reference, but is not provided as a separate clip, but directly molded onto lateral side wire 13 during the injection molding performed in the molding station 27 of the embodiment of Fig. 4.

Other forms of coupling elements for fixing additional adjusting elements to the pad and also coupling elements for coupling the suspension pad to a seat frame may also be provided in the injection molding process.

The attachment of adjustment means like the above-mentioned Bowden cables may, in the embodiment of Fig. 4, be performed in an optional finalizing station 28.

It should be noted that the above-described embodiments only serve as an example of the present invention and are not to be construed as limiting the scope thereof. For example, while in the above-described embodiments a complete wire frame of a suspension pad like the one shown in Fig. 1 is subjected to an injection molding process, in other embodiments only a smaller portion of the suspension pad is formed of wires and then subjected to a molding process before one or more further wires are attached. For example, with reference to the embodiments of Figs. 1-3 in a different embodiment in a first step the transverse wires 10 could be provided with the lateral side wire 12 attached thereto and placed together in a molding form to provide band-like portion 19, anchoring portion 18 as well as plastic portions 15, 16 and 17, and then the lateral side wire 13 would be attached to the transverse wires and the plastic portions 20, 21 would be provided by a further molding step. Such an embodiment may in particular be used when different plastic materials are used for overmolding. On the other hand, different plastic materials may also be used in a single overmolding step by providing a plurality of injection ports for the different plastic materials in the molding form.

## Claims

1. A method for manufacturing a suspension pad, comprising the steps of:
providing a suspension pad portion made from a plurality of wires (10, 12, 13), and
overmolding at least part of the suspension pad portion with a plastic material (15-21).

2. The method according to claim 1,
wherein said suspension pad portion comprises the complete wire portion of the suspension pad to be manufactured.

3. The method according to claim 1 or 2, wherein said providing step comprises:
coupling two lateral side wires (12, 13) with a plurality of transverse wires (10).

4. The method according to claim 3,
wherein said overmolding step comprises at least one of providing a plastic portion (18, 19) coupling said plurality of transverse wires in a middle portion thereof, providing a plastic portion (15, 17, 20) at end portions of said transverse wires and providing plastic portions (16, 21) at coupling portions between said transverse wires (10) and said lateral side wires (12, 13).

5. The method according to any one of the preceding claims, wherein said overmolding step further comprises:
providing the suspension pad portion with at least one coupling element (23) for coupling the suspendion pad to be manufactured with further elements (24, 25).

6. The method according to any one of the preceding claims,
wherein said overmolding step comprises performing an injection molding process.

7. An apparatus for manufacturing a suspension pad, comprising:
means (27, 29) for overmolding at least a part of a suspension pad portion with a plastic material, said suspension pad portion comprising a plurality of wires (10, 12, 13).

8. The apparatus according to claim 7,
wherein the apparatus is adapted to perform the method according to any one of claims 1-6.

9. A suspension pad comprising:
a plurality of wires (10, 12, 13), and
at least one overmolded portion (19, 21, 16) covering at least two of the plurality of wires (10, 12, 13).

10. The suspension pad according to claim 9,
wherein said plurality of wires comprises a plurality of substantially parallel transverse wires (10), wherein said overmolded portion comprises a portion (19) spanning the plurality of transverse wires.

11. The suspension pad according to claim 9 or 10,
wherein said suspension pad comprises at least one lateral side wire (12, 13) and a transverse wire (10), the transverse wire (10) being coupled with the lateral side wire (12, 13), said overmolded portion comprising a portion covering said lateral side wire (12, 13) and said transverse wire (10) at a location of said coupling.

12. The suspension pad according to claim 11, wherein said transverse wire is coupled to said lateral side wire (12, 13) by winding said transverse wire (10) around said lateral side wire (12, 13).

13. The suspension pad according to any one of claims 9-12,
wherein the suspension pad is formed by the method according to any one of claims 1-6.
